# EUROPEAN PATENT SPECIFICATION

(11) **EP 3 502 283 B1**
(45) Date of publication and mention of the grant of the patent: **14.07.2021**
(21) Application number: 18205582.2
(22) Date of filing: 12.11.2018
(51) Int. Cl.: C21D 1/22, C21D 1/25, C21D 1/673, C21D 8/04

(54) **STEEL PLATE MEMBER AND METHOD OF PRODUCING THE SAME**
ELEMENT AUS STAHLPLATTE UND HERSTELLUNGSVERHAFERN DAFÜR
ÉLÉMENT DE TOLE EN ACIER ET SON PROCÉDÉ DE PRODUCTION

(30) Priority: 20.12.2017 JP 2017243904
(43) Date of publication of application: 26.06.2019
(73) Proprietor: TOYOTA JIDOSHA KABUSHIKI KAISHA, Toyota-shi, Aichi-ken, 471-8571 (JP)
(72) Inventor: IHARA, Tomoaki, Toyota-shi, Aichi-ken, 471-8571 (JP); YAMAZAKI, Satoshi, Toyota-shi, Aichi-ken, 471-8571 (JP)
(74) Representative: Winter, Brandl - Partnerschaft mbB

(56) References cited:
- EP-A1- 3 323 524
- WO-A1-2012/156084
- WO-A1-2016/046637
- US-A1- 2009 242 086
- NISHIBATA TOSHINOBU ET AL: "Effect of quenching rate on hardness and microstructure of hot-stamped steel", JOURNAL OF ALLOYS AND COMPOUNDS, vol. 577, 5 January 2012 (2012-01-05), XP028803652, ISSN: 0925-8388, DOI: 10.1016/J.JALLCOM.2011.12.154

## Description

### 1. Field of the Invention

The present invention relates to a steel plate member and a method of producing the same and particularly relates to a steel plate member including a hard region containing martensite and a soft region softer than the hard region and a method of producing the steel plate member.

### 2. Description of Related Art

In recent years, steel plate members including a hard region resistant to impact and a soft region for joining to another metal member have been developed, for example, as structural members for automobiles. Japanese Patent Application Publication No. 2012-144773 discloses a technique of forming a hard region and a soft region in one steel plate member by locally heating only a region of the steel plate member to a temperature higher than an austenite transformation finish temperature A3 and quenching the heated region.

A method of producing a steel plate, and a steel plate member, are known from WO2012/156084A1. A steel plate member is known from EP 3 323 524 A1 which is a document according to Article 54(3) EPC.

### SUMMARY OF THE INVENTION

The invention is defined by the features of claim 1 and claim 5. The inventors have found the following problems concerning a steel plate member including a hard region and a soft region and a method of producing the steel plate member. As disclosed in JP 2012-144773 A, local heating of only a region of a steel plate member to a temperature higher than the austenite transformation finish temperature A3 converts the microstructure of the region to an austenite single phase. Thus, the region becomes a hard region containing martensite after quenching. On the other hand, in a region heated only to a temperature lower than an austenite transformation start temperature A1, austenite does not form. After quenching, therefore, this region remains a soft region containing ferrite and pearlite as it is before quenching.

A boundary region between the hard region and the soft region is naturally heated to a temperature between the austenite transformation start temperature A1 and the austenite transformation finish temperature A3, and part of ferrite and pearlite in the boundary region is converted to austenite. Thus, after quenching, the boundary region has an unstable microstructure containing martensite which is hard and further containing ferrite and pearlite which are soft. This unfortunately results in high susceptibility to fracture in the boundary region between the hard region and soft region and hence low local ductility or bendability.

The present invention provides a steel plate member with reduced susceptibility to fracture in a boundary region between a hard region and a soft region and a method of producing the steel plate member.

A method of producing a steel plate member according to a first aspect of the present invention includes: heating a steel plate member to a temperature higher than an austenite transformation finish temperature and subsequently cooling the steel plate member at a cooling rate higher than an upper critical cooling rate (quenching step); and softening the steel plate member by reheating the steel plate member after the cooling of the steel plate member (tempering step), wherein the tempering step includes, without reheating a first region of the steel plate member, reheating a second region of the steel plate member to a temperature between an austenite transformation start temperature and the austenite transformation finish temperature and subsequently cooling the steel plate member at a cooling rate higher than the upper critical cooling rate to form a hard region containing martensite in the first region, a soft region containing martensite and tempered martensite in the second region, and a region consisting of tempered martensite in a boundary region between the first region and the second region.

In the method of producing a steel plate member according to the first aspect of the present invention, the tempering step includes, without reheating a first region of a steel plate member, reheating a second region of the steel plate member to a temperature between an austenite transformation start temperature and an austenite transformation finish temperature and subsequently cooling the steel plate member at a cooling rate higher than an upper critical cooling rate. This results in formation of a hard region containing martensite in the first region, formation of a soft region including martensite and tempered martensite in the second region, and formation of a region consisting of tempered martensite in a boundary region between the first region and the second region. Thus, an unstable microstructure containing martensite which is hard and further containing ferrite and pearlite which are soft is not formed in the boundary region, in consequence of which fracture in the boundary region can be prevented.

According to the first aspect, in the tempering step, the second region may be reheated by induction heating. With this feature, the second region of the steel plate member can be rapidly heated and, in addition, the temperature to which the second region is heated can be accurately controlled to a temperature between the austenite transformation start temperature and the austenite transformation finish temperature.

According to the first aspect, in the quenching step, the steel plate member may be press-formed after the heating of the steel plate member and before the cooling of the steel plate member. With this feature, spring back occurring in cold press can be avoided and, at the same time, a high-strength steel plate member can be obtained as a result of the cooling subsequent to the press forming.

According to the first aspect, the second region may be reheated by a high-frequency induction heating apparatus including a coil and a high-frequency power source, and the coil may include a plate member having a U-shaped cross-section, and the second region may be inserted inside the coil and inductively heated.

A steel plate member according to a second aspect of the present invention is a steel plate member including a hard region containing martensite, a soft region softer than the hard region, and a boundary region located between the hard region and the soft region, the soft region including martensite and tempered martensite, the boundary region including a region consisting of tempered martensite.

In the boundary region of the steel plate member according to the second aspect, a region consisting of tempered martensite is formed, while no unstable microstructure containing martensite which is hard and further containing ferrite and pearlite which are soft is formed. Thus, fracture in the boundary region can be prevented.

The steel plate member according to the second aspect may be a steel plate member for a pillar as a component of an automobile body and may be joined at the soft region to another metal member. With this feature, post-joining fracture can be prevented.

The soft region may be included in a flange portion provided at an end of the steel plate member according to the second aspect. With this feature, the soft region can easily be formed by induction heating.

The present invention can provide a steel plate member with reduced susceptibility to fracture in a boundary region between a hard region and a soft region and a method of producing the steel plate member.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a temperature chart illustrating a method of producing a steel plate member according to a first embodiment;
FIG. 2A is a schematic plan view illustrating a change in microstructure of a steel plate member during a local tempering step;
FIG. 2B is a schematic plan view illustrating a change in microstructure of the steel plate member during the local tempering step;
FIG. 2C is a schematic plan view illustrating a change in microstructure of the steel plate member during the local tempering step;
FIG. 3 is a schematic plan view of the steel plate member according to the first embodiment;
FIG. 4 is a temperature chart illustrating a method of producing a steel plate member according to a comparative example for the first embodiment;
FIG. 5 is a schematic plan view of a steel plate member according to the comparative example for the first embodiment;
FIG. 6 is a schematic perspective view of an induction heating apparatus used in a method of producing a steel plate member according to a second embodiment;
FIG. 7 is a temperature chart for induction heating of steel plates having different thicknesses;
FIG. 8A is a perspective view of an example of the steel plate member according to the second embodiment;
FIG. 8B is a perspective view of an example of the steel plate member according to the second embodiment;
FIG. 9 is a temperature chart illustrating the conditions of local tempering according to an Example of the second embodiment;
FIG. 10 is a graph showing the hardness distribution of a steel plate member produced by the method of producing a steel plate member according to an Example of the second embodiment;
FIG. 11 shows photographs of the microstructure of a steel plate member produced by the method of producing a steel plate member according to the second embodiment; and
FIG. 12 is a graph showing the hardness and critical bending angle of a boundary region 13 of a steel plate member according to an Example in comparison with those of a boundary region 23 of a steel plate member according to a comparative example.

### DETAILED DESCRIPTION OF EMBODIMENTS

Hereinafter, specific embodiments employing the present invention will be described in detail with reference to the drawings. It should be noted that the present invention is not limited to the embodiments described below. For clarity of explanation, the following description and the drawings are simplified as appropriate.

### First Embodiment

### Method of Producing Steel Plate Member

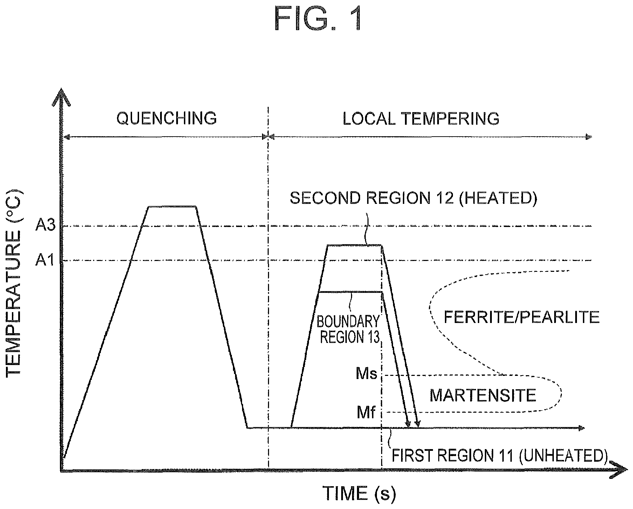

First, a method of producing a steel plate member according to a first embodiment will be described with reference to FIG. 1. The method of producing a steel plate member according to the first embodiment is suitable as a method of producing a steel plate member including a hard region resistant to impact and a soft region for joining to another metal member, the steel plate member being for use, for example, in automobiles. An example of the steel plate member for use in automobiles is a steel plate member for a pillar as a component of an automobile body.

FIG. 1 is a temperature chart illustrating the method of producing a steel plate member according to the first embodiment. In FIG. 1, the abscissa represents the time (s), and the ordinate represents the temperature (°C). As shown in FIG. 1, the method of producing a steel plate member according to the first embodiment includes a quenching step and a local tempering step. In the method of producing a steel plate member according to the first embodiment, the quenching step is performed first, followed by the local tempering step.

In the quenching step, first, the entire steel plate member is heated to a temperature higher than an austenite transformation finish temperature A3. As a result of this heating, the microstructure of the entire steel plate member converts from ferrite and pearlite to an austenite single phase. Subsequently, the steel plate member is cooled at a cooling rate higher than an upper critical cooling rate. This causes martensite transformation of the steel plate member, thus converting the microstructure of the entire steel plate member to martensite which is hard.

The steel plate member is preferably press-formed after the heating of the steel plate member and before the cooling of the steel plate member. This process is hot press, which enables obtaining a high-strength steel plate member through tempering subsequent to the press forming while avoiding spring back which may occur in the case of cold press. Such hot press is generally called hot stamping. The steel plate used for hot stamping is, for example, but not limited to, a steel plate made of manganese-boron steel and having a thickness of about 1 to 4 mm.

Next, in the local tempering step, only a region of the steel plate member is locally reheated and thus softened. Specifically, as shown in FIG. 1, only a second region 12 of the steel plate member is reheated to a temperature between an austenite transformation start temperature A1 and the austenite transformation finish temperature A3 without reheating of a first region 11 of the steel plate member. In this process, a boundary region 13 between the first region 11 and the second region 12 is heated to a temperature lower than the austenite transformation start temperature A1 by heat conduction from the second region 12 and thermally affected. The tempering temperature in common cases is lower than the austenite transformation start temperature A1; thus, the heating temperature in the local tempering step according to the first embodiment is higher than the tempering temperature in common cases.

Subsequently, the steel plate member is cooled at a cooling rate higher than the upper critical cooling rate to cause martensite transformation of the second region 12. FIG. 1 schematically shows a martensite transformation start temperature Ms, a martensite transformation finish temperature Mf, and a ferrite/pearlite nose in a continuous cooling transformation (CCT) phase diagram. That is, FIG. 1 schematically illustrates the process in which the second region 12 having been reheated to a temperature between the austenite transformation start temperature A1 and the austenite transformation finish temperature A3 is cooled at a cooling rate higher than the upper critical cooling rate.

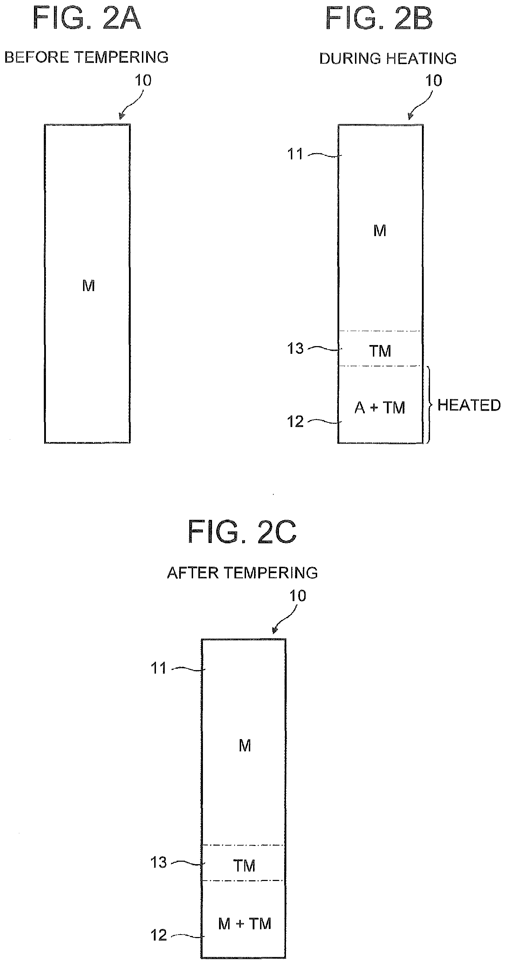

FIGS. 2A to 2C are schematic plan views illustrating the change in microstructure of the steel plate member during the local tempering step. First, the microstructure of a steel plate member 10 shown in FIG. 2A which has been subjected to the quenching step but has yet to be subjected to the local tempering step will be described. As shown in FIG. 2A, the microstructure of the entire steel plate member 10 contains martensite M before the local tempering step.

Next, the microstructure of the steel plate member 10 shown in FIG. 2B which is being heated in the local tempering step will be described. As shown in the temperature chart of FIG. 1, only the second region 12 of the steel plate member 10 is reheated to a temperature between the austenite transformation start temperature A1 and the austenite transformation finish temperature A3 during the heating in the local tempering step.

Thus, as shown in FIG. 2B, the heating in the local tempering step causes conversion of the martensite M to tempered martensite TM and further conversion of part of the tempered martensite TM to austenite A in the second region 12. As a result, the microstructure of the second region 12 becomes a mixed structure of the tempered martensite TM and the austenite A. In the vicinity of the boundary region 13, the temperature of the heated second region 12 is close to the austenite transformation start temperature A1, so that the amount of the austenite A decreases while the amount of the tempered martensite TM increases. The term "tempered martensite TM" is used herein to collectively refer to all structures resulting from the reheating-induced softening of the martensite M and encompasses troostite and sorbite.

Meanwhile, the first region 11 of the steel plate member 10 is not reheated and thus is not thermally affected. The microstructure of the first region 11 therefore remains unchanged from the martensite M. The boundary region 13 between the first region 11 and the second region 12 is heated to a temperature lower than the austenite transformation start temperature A1 by heat conduction from the second region 12 and thermally affected. This converts the microstructure of the boundary region 13 from the martensite M to the tempered martensite TM.

More specifically, the temperature of the heated boundary region 13 becomes higher and closer to the austenite transformation start temperature A1 with decreasing distance from the second region 12. For this reason, the second region 12-side of the boundary region 13, which is a major portion of the boundary region 13, has a microstructure consisting of the tempered martensite TM. In the vicinity of the first region 11 in the boundary region 13, both the tempered martensite TM and the martensite M are present. With decreasing distance from the first region 11 which contains the martensite M, the amount of the tempered martensite TM decreases and the amount of the martensite M increases. The boundary region 13 becomes softer gradually in the direction from the first region 11 which is hard to the second region 12 which is soft, because, as described above, the amount of the tempered martensite TM heated to a high temperature increases with decreasing distance from the second region 12.

Next, the microstructure of the steel plate member 10 shown in FIG. 2C which has been subjected to the local tempering step will be described. As shown in FIG. 1, the cooling process in the local tempering step cools the steel plate member 10 at a cooling rate higher than the upper critical cooling rate. Thus, as shown in FIG. 2C, the austenite A formed in the second region 12 during heating converts to the martensite M. As a result, the microstructure of the second region 12 becomes a mixed structure of the tempered martensite TM and the martensite M. The microstructure of the first region 11 remains unchanged from the martensite M. The microstructure of the boundary region 13 remains unchanged from the tempered martensite TM.

### Configuration of Steel Plate Member

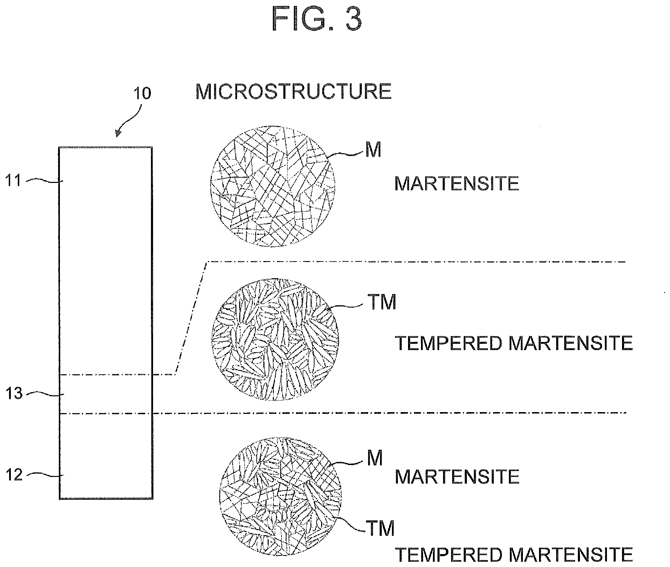

Next, a steel plate member according to the first embodiment will be described with reference to FIG. 3. FIG. 3 is a schematic plan view of a steel plate member according to the first embodiment. The steel plate member according to the first embodiment is a steel plate member produced by the method of producing the steel plate member according to the first embodiment which is illustrated in FIG. 1.

As shown in FIG. 3, the steel plate member 10 according to the first embodiment includes a first region 11, a second region 12, and a boundary region 13.

FIG. 3 schematically shows the respective microstructures of the first region 11, the second region 12, and the boundary region 13. The microstructures of the steel plate member 10 shown in FIG. 3 are identical to the microstructures of the steel plate member 10 shown in FIG. 2C which has been subjected to the local tempering step.

As shown in FIG. 3, the first region 11 is a hard region containing the martensite M which is hard. The second region 12 is a soft region containing the martensite M and the tempered martensite TM. In the vicinity of the boundary region 13 in the second region 12, the amount of the martensite M gradually decreases with decreasing distance from the boundary region 13. The second region 12, which is soft, is provided mainly for the purpose of joining the steel plate member 10 to another metal member by spot welding or laser welding. Joining at the soft region rather than at the hard region can prevent post-joining fracture.

The boundary region 13 is formed between the first region 11 and the second region 12. The second region 12-side of the boundary region 13, which is a major portion of the boundary region 13, has a microstructure consisting of the tempered martensite TM. In the vicinity of the first region 11 in the boundary region 13, both the tempered martensite TM and the martensite M are present. With decreasing distance from the first region 11, the amount of the tempered martensite TM decreases and the amount of the martensite M increases.
Steel Plate Member according to Comparative Example and Method of Producing the Same

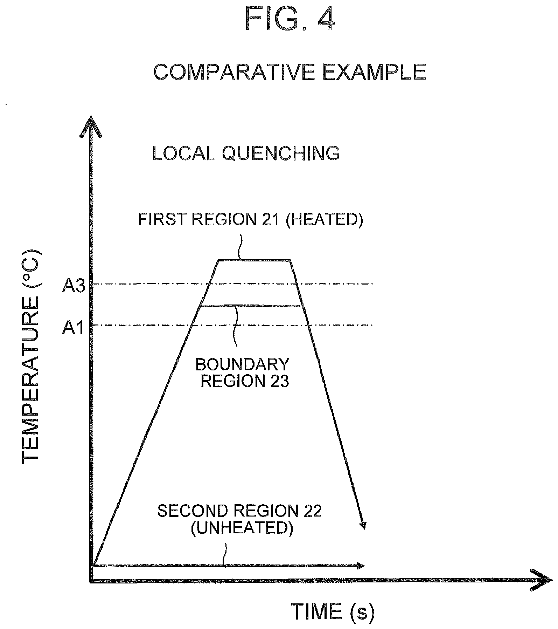

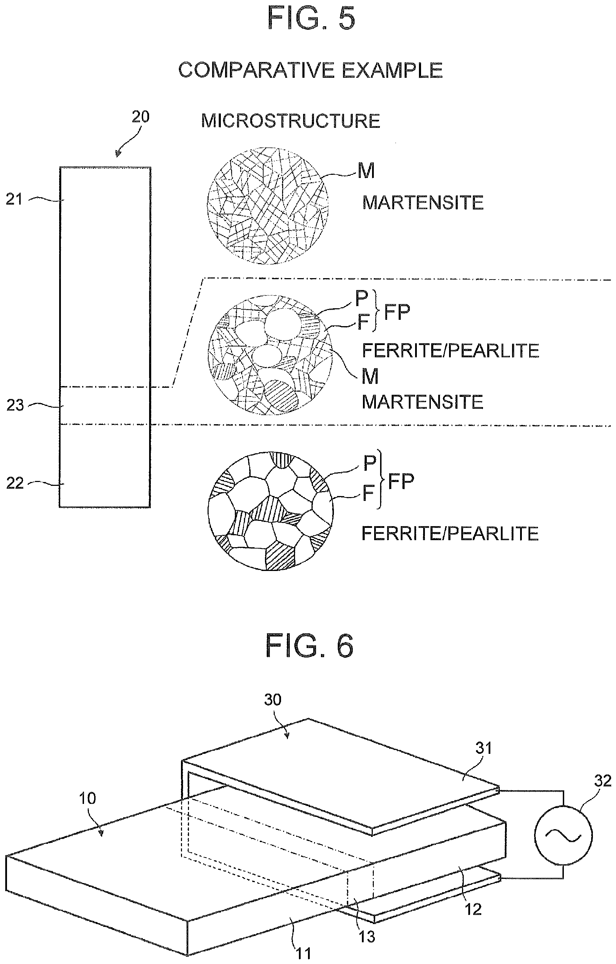

Hereinafter, a steel plate member according to a comparative example for the first embodiment and a method of producing the steel plate member will be described with reference to FIG. 4 and FIG. 5. FIG. 4 is a temperature chart illustrating the method of producing the steel plate member according to the comparative example for the first embodiment. FIG. 5 is a schematic plan view of the steel plate member according to the comparative example for the first embodiment. First, the method of producing the steel plate member according to the comparative example will be described with reference to FIG. 4. In FIG. 4, the abscissa represents the time (s) and the ordinate represents the temperature (°C). As shown in FIG. 4, the steel plate member according to the comparative example includes only a local quenching step.

In the local quenching step, only a region of the steel plate member is locally heated to a temperature higher than the austenite transformation finish temperature A3. Specifically, as shown in FIG. 4, only a first region 21 of the steel plate member is heated to a temperature higher than the austenite transformation finish temperature A3 without heating of a second region 22 of the steel plate member. As a result of this heating, the microstructure of the first region 21 converts from ferrite and pearlite to an austenite single phase. The second region 22 includes a region heated to a temperature lower than the austenite transformation start temperature A1. The microstructure of the second region 22 remains unchanged from ferrite and pearlite.

A boundary region 23 between the first region 21 and the second region 22 is heated to a temperature between the austenite transformation start temperature A1 and the austenite transformation finish temperature A3 by heat conduction from the second region 22. This converts part of ferrite and pearlite to austenite in the microstructure of the boundary region 23. Thus, the microstructure of the boundary region 23 becomes a mixed structure of ferrite, pearlite, and austenite.

Subsequently, the steel plate member is cooled at a cooling rate higher than an upper critical cooling rate. This causes all of the austenite to undergo martensite transformation, leading to a change of the microstructure of the first region 21 into martensite which is hard. The microstructure of the boundary region 23 becomes a mixed structure of ferrite which is soft, pearlite which is soft, and martensite which is hard. The microstructure of the second region 22 remains unchanged from ferrite and pearlite.

Next, the steel plate member according to the comparative example for the first embodiment will be described with reference to FIG. 5. The steel plate member according to the comparative example is a steel plate member produced by the method of producing the steel plate member according to the comparative example which is illustrated in FIG. 4. As shown in FIG. 5, a steel plate member 20 according to the comparative example includes a first region 21, a second region 22, and a boundary region 23. FIG. 5 schematically shows the respective microstructures of the first region 21, the second region 22, and the boundary region 23.

As shown in FIG. 5, the first region 21 is a hard region containing martensite which is hard. The second region 22 is a soft region containing ferrite F and pearlite P (ferrite/pearlite FP) which are soft. The boundary region 23 is formed between the first region 21 and the second region 22 and is a mixed structure of the ferrite/pearlite FP which is soft and the martensite M which is hard.

In the steel plate member 20 according to the comparative example, as described above, the boundary region 23 has an unstable microstructure containing both the martensite M which is hard and the ferrite/pearlite FP which is soft. Thus, fracture is likely to occur in the boundary region between the hard region and the soft region. Advantage effects of Steel Plate Member according to First Embodiment and Method of Producing the Same

Next, the advantage effects of the steel plate member according to the first embodiment and the method of producing the steel plate member will be described. As described above, the steel plate member 20 according to the comparative example, which is shown in FIG. 5, has the boundary region 23 having an unstable microstructure containing both the martensite M which is hard and the ferrite/pearlite FP which is soft.

By contrast, as shown in FIG. 3, the boundary region 13 of the steel plate member 10 according to the first embodiment has a microstructure consisting of the tempered martensite TM. This can prevent fracture in the boundary region 13 between the first region 11 which is hard and the second region 12 which is soft. In the vicinity of the first region 11 in the boundary region 13, both the tempered martensite TM and the martensite M are present; however, fracture can be prevented because of a small difference in hardness between the tempered martensite TM and the martensite M adjacent to each other.

Furthermore, the boundary region 13 of the steel plate member 10 according to the first embodiment is heated to a higher temperature and thus becomes softer with decreasing distance from the second region 12 heated in the local tempering step. That is, the boundary region 13 of the steel plate member 10 according to the first embodiment becomes softer gradually in the direction from the first region 11-side which is hard to the second region 12-side which is soft. Thus, fracture in the boundary region 13 between the first region 11 which is hard and the second region 12 which is soft can be more effectively prevented.

In the steel plate member 20 according to the comparative example, the second region 22 which is a soft region contains the ferrite/pearlite FP, while in the steel plate member 10 according to the present embodiment, the second region 12 which is a soft region contains the martensite M and the tempered martensite TM. The second region 12 of the steel plate member 10 according to the present embodiment is therefore not as soft as the second region 22 of the steel plate member 20 according to the comparative example. However, the second region 12 is soft enough to prevent fracture which may occur after joining to another metal member.

The second region 12 of the steel plate member 10 according to the present embodiment has a mixed structure, just as does the boundary region 23 of the steel plate member 20 according to the comparative example. However, the difference in hardness between the martensite M and the tempered martensite TM in the second region 12 of the steel plate member 10 according to the present embodiment is smaller than the difference in hardness between the martensite M and the ferrite/pearlite FP in the boundary region 23 of the steel plate member 20 according to the comparative example. Fracture is therefore not likely to occur in the second region 12 either.

### Second Embodiment

### Method of Producing Steel Plate Member

Next, a method of producing a steel plate member according to a second embodiment will be described with reference to FIG. 6. FIG. 6 is a schematic perspective view of an induction heating apparatus used in the method of producing a steel plate member according to the second embodiment. In the method of producing a steel plate member according to the first embodiment, the way of heating the steel plate member 10 in the local tempering step is not particularly limited. By contrast, in the method of producing a steel plate member according to the second embodiment, an induction heating apparatus 30 shown in FIG. 6 is used to heat the steel plate member 10 in the local tempering step. The other features of the second embodiment are the same as those of the first embodiment and will therefore not be described in detail.

As shown in FIG. 6, the induction heating apparatus 30 is a high-frequency induction heating apparatus including a coil 31 and a high-frequency power source 32. As shown in FIG. 6, the coil 31 is a horizontally-positioned plate member having a U-shaped cross-section. The high-frequency power source 32 is connected to the two open ends of the coil 31. Only the second region 12 of the steel plate member 10 is inserted inside the coil 31 and inductively heated to a temperature between the austenite transformation start temperature A1 and the austenite transformation finish temperature A3. Being placed outside the coil 31, the first region 11 of the steel plate member 10 is not inductively heated and is not thermally affected by heat conduction from the second region 12. The boundary region 13 between the first region 11 and the second region 12 is heated to a temperature lower than the austenite transformation start temperature A1 by heat conduction from the second region 12 and thermally affected.

In the high-frequency induction heating, the heating efficiency abruptly drops at the Curie point where the steel plate member 10 loses the magnetic properties, and thus the increase in the temperature of the heated region becomes difficult around the Curie point. Since austenite is non-magnetic while martensite, ferrite, and pearlite are ferromagnetic, the Curie point lies between the austenite transformation start temperature A1 and the austenite transformation finish temperature A3.

Thus, with the use of high-frequency induction heating, only the second region 12 of the steel plate member 10 can be rapidly heated, and the temperature to which the second region 12 is heated can be easily and accurately kept at a temperature between the austenite transformation start temperature A1 and the austenite transformation finish temperature A3. Since rapid heating of only the second region 12 of the steel plate member 10 is possible, the boundary region 13 thermally affected by heat conduction from the second region 12 can be narrowed. Thanks to the fact that the temperature to which the second region 12 is heated can be easily and accurately kept at a temperature between the austenite transformation start temperature A1 and the austenite transformation finish temperature A3, variation in the structure of the tempered second region 12 can be reduced.

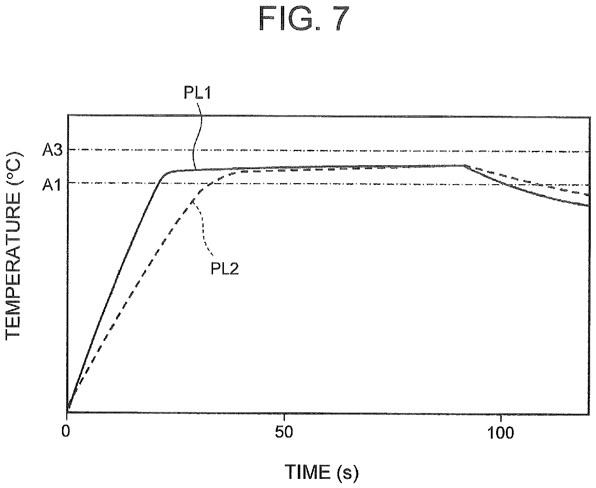

FIG. 7 is a temperature chart for induction heating of steel plates having different thicknesses. The abscissa represents the time, and the ordinate represents the temperature. Both of the steel plates PL1 and PL2 are steel plates for hot stamping which are made of manganese-boron steel (22MnB5 steel). The steel plate PL2 is thicker by about 1 mm than the steel plate PL1. It thus takes a longer time to increase the temperature of the steel plate PL2 than to increase the temperature of the steel plate PL1. However, the use of high-frequency induction heating led to successful rapid heating of both of the steel plates PL1 and PL2. Additionally, for the both of the steel plates PL1 and PL2 having different thicknesses, the temperature to which the second region was heated was easily and accurately kept at a temperature between the austenite transformation start temperature A1 and the austenite transformation finish temperature A3 by virtue of the use of high-frequency induction heating.

### Configuration of Steel Plate Member

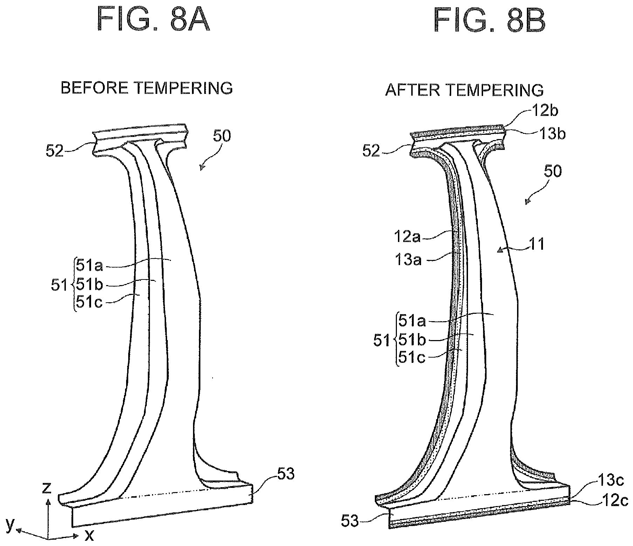

Next, the configuration of an example of the steel plate member according to the second embodiment will be described with reference to FIGS. 8A and 8B. FIGS. 8A and 8B are perspective views of an example of the steel plate member according to the second embodiment. The steel plate member according to the second embodiment is a steel plate member produced by the method of producing the steel plate member according to the second embodiment. A steel plate member 50 shown in FIGS. 8A and 8B is a steel plate member for a pillar as a component of an automobile body and is specifically a center pillar reinforcement. In FIGS. 8A and 8B are shown the steel plate member 50 that has yet to be subjected to the local tempering step and the steel plate member 50 that has been subjected to the local tempering step, and the shape of the steel plate member 50 remains the same before and after the local tempering step.

It should be understood that the right-handed xyz Cartesian coordinate system shown in FIGS. 8A and 8B is one defined for convenience of explanation of the positional relationship among the constituting elements of the steel plate member. The intended use and shape of the steel plate member 50 shown in FIGS. 8A and 8B are only illustrative, and the intended use and shape of the steel plate member according to the present embodiment are not limited in any respect.

As shown in FIGS. 8A and 8B, the steel plate member 50 according to the second embodiment includes a body portion 51, an upper flange portion 52, and a lower flange portion 53. As shown in FIGS. 8A and 8B, the body portion 51 is a portion having a hat-shaped cross-section and includes a top plate 51a extending lengthwise in the z-axis direction, side walls 51b, and flange portions 51c. More specifically, a pair of side walls 51b extend perpendicularly from the ends in the width direction (direction of the x-axis) of the top plate 51a extending lengthwise in the z-axis direction. Further, the flange portions 51c project outwardly from the ends in the height direction (direction of the y-axis) of each side wall 51b.

The body portion 51 is slightly curved such that the body portion 51 bulges as a whole in the negative direction of the y-axis. Additionally, the upper end portion (end portion in the positive direction of the z-axis) and the lower end portion (end portion in the negative direction of the z-axis) of the body portion 51 are widened in the width direction (direction of the x-axis) and are T-shaped in plan view. The degree of widening in the width direction is greater in the lower end portion than in the upper end portion.

The upper flange portion 52 includes a plate surface extending perpendicularly from the upper end portion of the body portion 51 in the negative direction of the y-axis and a plate surface projecting from the end in the height direction (direction of the y-axis) of the above plate surface outwardly in the length direction of the body portion 51 (in the positive direction of the z-axis). Thus, the upper flange portion 52 is a portion extending lengthwise in the width direction (direction of the x-axis) to present an L-shaped cross-section. The lower flange portion 53 is a flat plate-shaped portion projecting from the lower end of the top plate 51a outwardly in the length direction (in the negative direction of the z-axis) and extending lengthwise in the width direction (direction of the x-axis).

The steel plate member 50 according to the second embodiment, which is shown in FIGS. 8A and 8B, is produced by press-forming a flat plate in the quenching step described above. Thus, the microstructure of the steel plate member 50 shown in FIG. 8A which has yet to be subjected to the local tempering step contains the martensite M over the entire steel plate member 50.

In the steel plate member 50 shown in FIG. 8B which has been subjected to the local tempering step, a second region 12a containing the martensite M and the tempered martensite TM is formed in a band shape at the outer edge of each of the pair of flange portions 51c of the body portion 51. That is, in the local tempering step, the second region 12a is locally heated by induction heating. Inwardly of the second region 12a is formed a boundary region 13a consisting of the tempered martensite TM.

Likewise, a second region 12b containing the martensite M and the tempered martensite TM is formed in a band shape at the outer edge of the upper flange portion 52. That is, in the local tempering step, the second region 12b is locally heated by induction heating. Inwardly of the second region 12b is formed a boundary region 13b consisting of the tempered martensite TM.

Likewise, a second region 12c containing the martensite M and the tempered martensite TM is formed in a band shape at the outer edge of the lower flange portion 53. That is, in the local tempering step, the second region 12c is locally heated by induction heating. Inwardly of the second region 12c is formed a boundary region 13c consisting of the tempered martensite TM.

In the steel plate member 50 shown in FIG. 8B which has been subjected to the local tempering step, the region other than the second regions 12a, 12b, and 12c and the boundary regions 13a, 13b, and 13c is the first region 11 containing the martensite M.

The steel plate member 50 thus produced is joined to another metal member by spot welding or other means at the soft second regions 12a, 12b, and 12c provided in the flange portion 51c, upper flange portion 52, and lower flange portion 53, respectively. Joining at the soft regions rather than at hard regions can prevent post-joining fracture. Since the flange portion 51c, upper flange portion 52, and lower flange portion 53 are provided at the ends of the steel plate member 50, the soft regions can be easily formed by induction heating.

Additionally, in the steel plate member 50, the second region 12a is formed in a band shape which, as shown in FIG. 8A, extends over the entire length of the body portion 51. Thus, there may be a risk that the cooling process in the local tempering step causes a change in the dimensions of the steel plate member 50 and hence a deterioration of the dimensional accuracy. In the method of producing a steel plate member according to the present embodiment, the cooling rate in the cooling process in the local tempering step is high, which permits the cooling to be performed with the steel plate member 50 being held by a cooling mold or other means. This makes it possible to reduce the dimensional change of the steel plate member 50 during the cooling process in the local tempering step.

### Examples

The following describes an Example of the second embodiment in which the steel plate member is inductively heated in the local tempering step. The steel plate member used was a quenched steel plate for hot stamping which was made of manganese-boron steel (22MnB5 steel) and which had a thickness of 2.0 mm, a width of 100 mm, and a length of 300 mm.

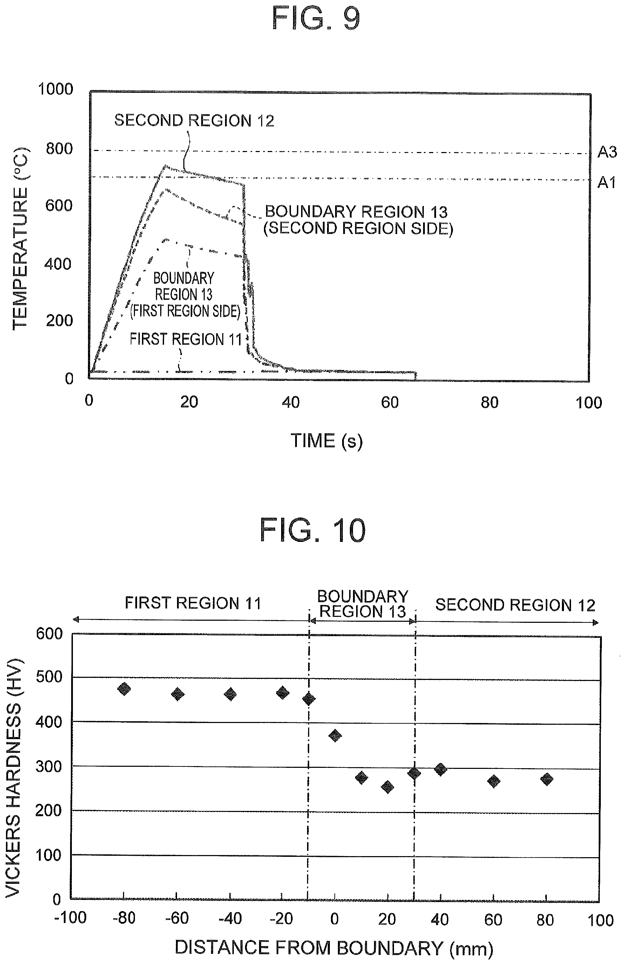

FIG. 9 is a temperature chart illustrating the conditions of the local tempering according to the Example of the second embodiment. The abscissa represents the time and the ordinate represents the temperature. In FIG. 9 are shown temperature profiles in the four regions, namely the first region 11, the second region 12, the first region-side of the boundary region 13, and the second region-side of the boundary region 13. As shown in FIG. 9, only the second region 12 of the steel plate member was heated to a temperature between the austenite transformation start temperature A1 and the austenite transformation finish temperature A3, and then the steel plate member was cooled at a cooling rate higher than the upper critical cooling rate to cause martensite transformation of the second region 12.

As described in detail below, the local tempering according to the Example resulted in formation of a hard region containing the martensite M in the first region 11 shown in FIG. 9. In the second region 12 shown in FIG. 9 was formed a soft region containing the martensite M and the tempered martensite TM. Both the first region-side of the boundary region 13 and the second region-side of the boundary region 13 which are shown in FIG. 9 had a microstructure consisting of the tempered martensite TM. The second region-side of the boundary region 13, which was heated to a higher temperature than the first region-side of the boundary region 13, had lower hardness than the first region-side of the boundary region 13.

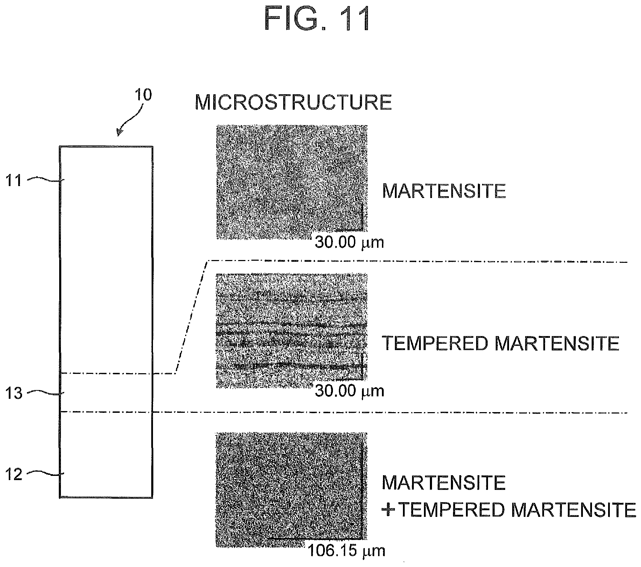

FIG. 10 and FIG. 11 show the hardness distribution and photographs of the microstructure of the steel plate member produced by the method of producing the steel plate member according to the Example of the second embodiment, respectively. FIG. 10 is a graph showing the hardness distribution of the steel plate member produced by the method of producing the steel plate member according to the second embodiment. FIG. 11 shows photographs of the microstructure of the steel plate member produced by the method of producing the steel plate member according to the second embodiment.

As shown in FIG. 10, a boundary region 13 is formed between a hard first region 11 having a high Vickers hardness (HV) and a soft second region 12 having a low Vickers hardness (HV). As shown in FIG. 10, the boundary region 13 thermally affected by heat conduction from the second region 12 was able to be narrowed to about 40 mm by the use of high-frequency induction heating. It was also found that the boundary region 13 became softer gradually in the direction from the hard first region 11 having a hardness of about 480 HV to the soft second region 12 having a hardness of about 300 HV. In the vicinity of the second region 12 in the boundary region 13 consisting of tempered martensite, the hardness decreased to about 250 HV, while in the second region 12 containing martensite and tempered martensite, the hardness increased to about 300 HV.

As shown in FIG. 11, the microstructure of the first region 11 was a structure containing martensite. The microstructure of the second region 12 was a mixed structure of martensite and tempered martensite. The microstructure of the boundary region 13 was a structure consisting of tempered martensite. Thus, microstructures similar to the microstructures shown in FIG. 3 were actually obtained.

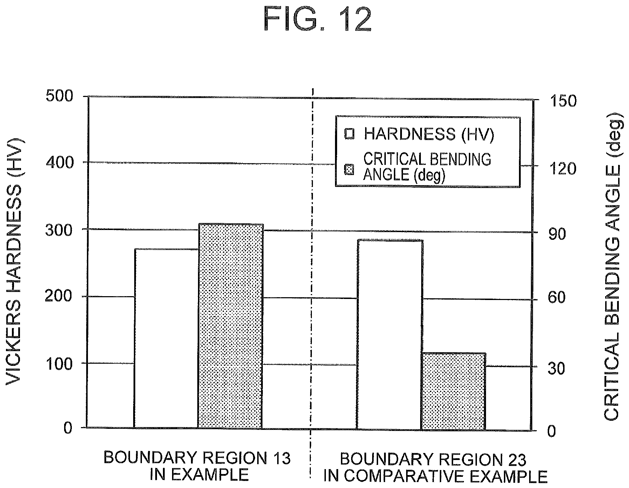

FIG. 12 is a graph showing the hardness and critical bending angle of the boundary region 13 of the steel plate member according to the Example in comparison with those of a boundary region 23 of a steel plate member according to a comparative example. The bending test for determining the critical bending angle (deg) was conducted in accordance with VDA 238-100, a standard specified by German Association of the Automotive Industry. As shown in FIG. 12, the Vickers hardness (HV) of the boundary region 13 in the Example was comparable to the Vickers hardness (HV) of the boundary region 23 in the comparative example.

As shown in FIG. 12, the critical bending angle (deg) of the boundary region 13 in the Example was twice or more the critical bending angle (deg) of the boundary region 23 in the comparative example, which demonstrated a significant improvement in bendability. The reason for the low bendability of the boundary region 23 in the comparative example is that, as described with reference to FIG. 5, the boundary region 23 has an unstable microstructure containing both the martensite M which is hard and the ferrite/pearlite FP which is soft. The high bendability of the boundary region 13 in the Example can be attributed to the fact that the boundary region 13 has a structure consisting of tempered martensite.

The present invention is not limited to the embodiments described above, and modifications can be made as appropriate without departing from the scope of the present invention as defined in the present claims.

## Claims

1. A method of producing a steel plate member (10, 50), comprising:
heating a steel plate member (10, 50) to a temperature higher than an austenite transformation finish temperature (A3) and subsequently cooling the steel plate member (10, 50) at a cooling rate higher than an upper critical cooling rate, so that the microstructure of the entire steel plate member (10, 50) contains martensite (M); and
softening the steel plate member (10, 50) by reheating the steel plate member (10, 50) after the cooling of the steel plate member (10, 50),
wherein the softening of the steel plate member (10, 50) includes, without reheating a first region (11) of the steel plate member (10, 50), reheating a second region (12) of the steel plate member (10, 50) to a temperature between an austenite transformation start temperature (A1) and the austenite transformation finish temperature (A3) and subsequently cooling the steel plate member (10, 50) at a cooling rate higher than the upper critical cooling rate,
the softening of the steel plate member (10, 50) leaving a hard region containing martensite (M) in the first region (11), forming a soft region containing the martensite (M) and tempered martensite (TM) in the second region (12), and forming a region consisting of the tempered martensite (TM) in a boundary region (13) between the first region (11) and the second region (12), the amount of the tempered martensite (TM) in the boundary region (13) decreasing and the amount of martensite (M) in the boundary region (13) increasing, with decreasing distance from the first region (11).

2. The method of producing a steel plate member (10, 50) according to claim 1, wherein in the softening of the steel plate member (10, 50), the second region (12) is reheated by induction heating.

3. The method of producing a steel plate member (10, 50) according to claim 1 or 2, wherein the steel plate member (10, 50) is press-formed after the heating of the steel plate member (10, 50) and before the cooling of the steel plate member (10, 50).

4. The method of producing a steel plate member (10, 50) according to claim 2, wherein the second region (12) is reheated by a high-frequency induction heating apparatus including a coil (31) and a high-frequency power source (32), the coil (31) includes a plate member having a U-shaped cross-section, and the second region (12) is inserted inside the coil (31) and inductively heated.

5. A steel plate member (10, 50) comprising:
a hard region containing martensite (M);
a soft region softer than the hard region, the soft region containing martensite (M) and tempered martensite (TM); and
a boundary region (13) located between the hard region and the soft region, the boundary region including a region consisting of tempered martensite (TM), the amount of the tempered martensite (TM) in the boundary region (13) decreasing and the amount of martensite (M) in the boundary region (13) increasing, with decreasing distance from the first region (11).

6. The steel plate member (10, 50) according to claim 5, wherein the steel plate member (10, 50) is a steel plate member (50) for a pillar as a component of an automobile body and is joined at the soft region to another metal member.

7. The steel plate member (10, 50) according to claim 6, wherein a flange portion (51c, 52, 53) provided at an end of the steel plate member (50) includes the soft region.

## Patentansprüche

1. Verfahren zum Herstellen eines Stahlplattenelements (10, 50), mit:
Erwärmen eines Stahlplattenelements (10, 50) auf eine Temperatur höher als eine Austenit-Umwandlungsendtemperatur (A3) und anschließendes Abkühlen des Stahlplattenelements (10, 50) mit einer Abkühlungsrate höher als eine obere kritische Abkühlungsrate, so dass die Mikrostruktur des gesamten Stahlplattenelements (10, 50) Martensit (M) enthält; und
Erweichen des Stahlplattenelements (10, 50) durch Wiedererwärmen des Stahlplattenelements (10, 50) nach dem Abkühlen des Stahlplattenelements (10, 50),
wobei das Erweichen des Stahlplattenelements (10, 50) ein Wiedererwärmen eines zweiten Bereichs (12) des Stahlplattenelements (10, 50) auf eine Temperatur zwischen einer Austenit-Umwandlungsstarttemperatur (Al) und der Austenit-Umwandlungsendtemperatur (A3) ohne ein Wiedererwärmen eines ersten Bereichs (11) des Stahlplattenelements (10, 50), und ein anschließendes Abkühlen des Stahlplattenelements (10, 50) mit einer Abkühlungsrate höher als die obere kritische Abkühlungsrate beinhaltet,
wobei das Erweichen des Stahlplattenelements (10, 50) einen harten Bereich, der Martensit (M) enthält, in dem ersten Bereich (11) zurücklässt, einen weichen Bereich, der Martensit (M) und getempertes Martensit (TM) enthält, in dem zweiten Bereich (12) bildet, und einen aus getempertem Martensit (TM) bestehenden Bereich in einem Grenzbereich (13) zwischen dem ersten Bereich (11) und dem zweiten Bereich (12) bildet, wobei mit abnehmendem Abstand von dem ersten Bereich (11) die Menge des getemperten Martensits (TM) in dem Grenzbereich (13) abnimmt und die Menge des Martensits (M) in dem Grenzbereich (13) zunimmt.

2. Verfahren zum Herstellen eines Stahlplattenelements (10, 50) nach Anspruch 1, wobei beim Erweichen des Stahlplattenelements (10, 50) der zweite Bereich (12) durch Induktionserwärmung wiedererwärmt wird.

3. Verfahren zum Herstellen eines Stahlplattenelements (10, 50) nach Anspruch 1 oder 2, wobei das Stahlplattenelement (10, 50) nach dem Erwärmen des Stahlplattenelements (10, 50) und vor dem Abkühlen des Stahlplattenelements (10, 50) pressgeformt wird.

4. Verfahren zum Herstellen eines Stahlplattenelements (10, 50) nach Anspruch 2, wobei der zweite Bereich (12) durch eine Hochfrequenz-Induktionsheizvorrichtung mit einer Spule (31) und einer Hochfrequenz-Energiequelle (32) wiedererwärmt wird, die Spule (31) ein Plattenelement mit einem U-förmigen Querschnitt aufweist und der zweite Bereich (12) in die Spule (31) eingesetzt und induktiv erwärmt wird.

5. Stahlplattenelement (10, 50) mit
einem harten Bereich, der Martensit (M) enthält;
einem weichen Bereich weicher als der harte Bereich, wobei der weiche Bereich Martensit (M) und getempertes Martensit (TM) enthält; und
einem Grenzbereich (13), der zwischen dem harten Bereich und dem weichen Bereich angeordnet ist, wobei der Grenzbereich einen aus getempertem Martensit (TM) bestehenden Bereich enthält, wobei mit abnehmendem Abstand von dem ersten Bereich (11) die Menge des getemperten Martensits (TM) in dem Grenzbereich (13) abnimmt und die Menge des Martensits (M) in dem Grenzbereich (13) zunimmt.

6. Stahlplattenelement (10, 50) nach Anspruch 5, wobei das Stahlplattenelement (10, 50) ein Stahlplattenelement (50) für eine Säule als Bestandteil einer Automobilkarosserie ist und an dem weichen Bereich mit einem anderen Metallelement verbunden ist.

7. Stahlplattenelement (10, 50) nach Anspruch 6, wobei ein an einem Ende des Stahlplattenelements (50) vorgesehener Flanschabschnitt (51c, 52, 53) den weichen Bereich enthält.

## Revendications

1. Procédé de fabrication d'un élément de tôle en acier (10, 50), comprenant le fait de :
chauffer un élément de tôle en acier (10, 50) à une température plus élevée qu'une température de fin de transformation d'austénite (A3) et refroidir ensuite l'élément de tôle en acier (10, 50) à une vitesse de refroidissement plus grande qu'une vitesse de refroidissement critique supérieure, de telle sorte que la microstructure de l'élément de tôle en acier entier (10, 50) contient de la martensite (M) ; et
adoucir l'élément de tôle en acier (10, 50) en réchauffant l'élément de tôle en acier (10, 50) après le refroidissement de l'élément de tôle en acier (10, 50),
l'adoucissement de l'élément de tôle en acier (10, 50) comprenant le fait de, sans réchauffer une première zone (11) de l'élément de tôle en acier (10, 50), réchauffer une deuxième zone (12) de l'élément de tôle en acier (10, 50) à une température entre une température de début de transformation d'austénite (A1) et la température de fin de transformation d'austénite (A3) et refroidir ensuite l'élément de tôle en acier (10, 50) à une vitesse de refroidissement plus grande que la vitesse de refroidissement critique supérieure,
l'adoucissement de l'élément de tôle en acier (10, 50) laissant une zone dure contenant de la martensite (M) dans la première zone (11), formant une zone adoucie contenant de la martensite (M) et de la martensite revenue (TM) dans la deuxième zone (12), et formant une zone se composant de la martensite revenue (TM) dans une zone de limite (13) entre la première zone (11) et la deuxième zone (12), la quantité de la martensite revenue (TM) dans la zone de limite (13) diminuant et la quantité de martensite (M) dans la zone de limite (13) augmentant, avec une distance décroissante depuis la première zone (11).

2. Procédé de fabrication d'un élément de tôle en acier (10, 50) selon la revendication 1, selon lequel, dans l'adoucissement de l'élément de tôle en acier (10, 50), la deuxième zone (12) est réchauffée par chauffage par induction.

3. Procédé de fabrication d'un élément de tôle en acier (10, 50) selon la revendication 1 ou 2, selon lequel l'élément de tôle en acier (10, 50) est formée à la presse après le chauffage de l'élément de tôle en acier (10, 50) et avant le refroidissement de l'élément de tôle en acier (10, 50).

4. Procédé de fabrication d'un élément de tôle en acier (10, 50) selon la revendication 2, selon lequel la deuxième zone (12) est réchauffée par un appareil de chauffage par induction à haute fréquence comprenant une bobine (31) et une alimentation à haute fréquence (32), la bobine (31) comprend un élément de plaque ayant une section en forme de U, et la deuxième zone (12) est insérée à l'intérieur de la bobine (31) et chauffée de manière inductive.

5. Elément de tôle en acier (10, 50) comprenant :
une zone dure contenant de la martensite (M) ;
une zone adoucie plus douce que la zone dure, la zone adoucie contenant de la martensite (M) et de la martensite revenue (TM) ; et
une zone de limite (13) située entre la zone dure et la zone adoucie, la zone de limite comprenant une zone se composant de martensite revenue (TM), la quantité de la martensite revenue (TM) dans la zone de limite (13) diminuant et la quantité de martensite (M) dans la zone de limite (13) augmentant, avec une distance décroissante depuis la première zone (11).

6. Elément de tôle en acier (10, 50) selon la revendication 5, dans lequel l'élément de tôle en acier (10, 50) est un élément de tôle en acier (50) pour un montant en tant que composant d'une carrosserie d'automobile et est relié à la zone adoucie au niveau d'un autre élément en métal.

7. Elément de tôle en acier (10, 50) selon la revendication 6, dans lequel une partie de rebord (51c, 52, 53) prévue à une extrémité de l'élément de tôle en acier (50) comprend la zone adoucie.
